# FASCICULE DE BREVET EUROPEEN

(11) **EP 2 864 690 B1**
(45) Date de publication et mention de la délivrance du brevet: **10.03.2021**
(21) Numéro de dépôt: 13756188.2
(22) Date de dépôt: 26.06.2013
(51) Int. Cl.: F16M 13/04, G03B 17/56, H04N 5/232

(54) **DISPOSITIF POUR COMMANDER A DISTANCE MECANIQUEMENT LA NETTETE (FOCUS) ET/OU LE ZOOM ET/OU L'OUVERTURE DU DIAPHRAGME (IRIS) D'UNE CAMERA ET/OU D'UN APPAREIL PHOTO A PARTIR DE LA POIGNEE D'UNE EPAULIERE**
VORRICHTUNG FÜR MECHANISCHE FERNBEDIENUNG DER SCHÄRFE (FOCUS) UND/ODER DAS ZOOM UND/ODER DER BLENDENÖFFNUNG (IRIS) EINER KAMERA UND/ODER FOTOAPPARAT AUS EINEM GRIFF EINES SCHULTERPOLSTES
DEVICE FOR MECHANIC REMOTE CONTROL OF THE SHARPNESS (FOCUS) AND/OR THE ZOOM AND/OR THE DIAPHRAGM APERTURE (IRIS) OF A CAMERA AND/OR PHOTOGRAPHIC APPARATUS FROM A HANDLE OF A SHOULDER SUPPORT

(30) Priorité: 26.06.2012 FR 1201797
(43) Date de publication de la demande: 29.04.2015
(73) Titulaire: Scorpius Productions, 95200 Sarcelles (FR)
(72) Inventeur: COHEN, Simon, 95200 Sarcelles (FR)
(86) Numéro de dépôt international: PCT/FR2013/000164
(87) Numéro de publication internationale: WO 2014/001661

(56) Documents cités:
- WO-A1-02/097528
- DE-U1-202009 014 504
- US-A- 2 371 593
- US-A- 2 746 369
- US-A1- 2007 182 930
- US-B1- 6 773 110

## Description

La présente invention a pour objet un dispositif pour commander à distance la netteté et/ou le zoom et/ou l'iris d'une caméra et/ou d'un appareil photo de type reflex numérique (D.S.L.R. - Digital Single Lens Reflex) à partir de la poignée d'un support d'épaule pour ladite caméra et/ou appareil photo appelé par l'homme du métier épaulière ou crosse-épaule ou rig, d'une manière mécanique et manuelle.
Le secteur technique de l'invention est le secteur cinématographique et audiovisuel.

On connait des dispositifs de mise au point manuelle mécanique du nom de « *Suiveur de point* » appelés communément par l'homme du métier « Follow focus » qui sont des mécanismes de contrôle du point ou netteté de l'image constitués d'un dispositif de roues crantées fixées sur l'objectif de la caméra et/ou de l'appareil photo et qui peut être prolongé par une rallonge appelée « Whip » par l'homme du métier s'utilisant en mode statique, c'est-à-dire avec une caméra positionnée sur un trépied, en vue de la captation d'images à partir dudit trépied.

De tels dispositifs actionnés manuellement équipent les caméras et/ou les appareils photos de type reflex numériques (D.S.L.R.) quand ladite caméra et/ou appareil photo est positionnée sur un trépied en mode statique, c'est-à-dire dans le but de fabriquer des images fixes et/ou panoramiques mais sans permettre au cadreur ou opérateur caméra de suivre un individu d'une manière dynamique, c'est-à-dire en mouvement.

On connaît à cet égard du document US 2007/0182930 un dispositif de commande à distance selon le préambule de la revendication 1.

L'objectif de l'invention est de permettre audit cadreur d'embarquer ladite caméra et/ou l'appareil photo sur son épaule à l'aide de ladite épaulière, en ayant la possibilité de contrôler la netteté de l'image et/ou le zoom à partir de l'une des poignées qui compose ladite épaulière ou à partir des deux poignées s'il s'agit de contrôler d'une part la netteté de l'image et d'autre part le zoom ou l'iris, l'invention objet de la présente concernant tout le système rapporté à partir du « Follow focus », y compris ladite poignée.

Le système objet de l'invention, tel que défini à la revendication 1, permet un confort audit cadreur en lui offrant la possibilité d'ajuster la netteté de l'image tout en ayant les deux mains positionnées sur les poignées de ladite épaulière, réduisant les risques de bougé induits par l'abandon de l'une des poignées pour atteindre le follow-focus, ce qui se produit aujourd'hui avec les systèmes existant sur le marché.

Cet objectif est également atteint par un dispositif selon l'invention, pour commander à distance la netteté de l'image et/ou le zoom d'une caméra et/ou d'un appareil photo disposé à l'extrémité d'un arbre de transmission, pouvant être un arbre flexible, qui est un élément permettant un raccordement entre deux pièces tournantes situées sur un plan différent en transmettant une rotation entre les deux points allant de ladite caméra et/ou appareil photo jusqu'à un moyen actionneur de télécommande, caractérisé en ce qu'il se compose d'une molette ou bouton moleté qui est une petite roue striée raccordée à une extrémité dudit arbre flexible, lequel arbre flexible est composé, dans un mode de fabrication, d'un embout comportant un perçage cylindrique avec vis d'arrêt à chacune de ses extrémités afin de liaisonner d'une part ladite molette à la première extrémité et, d'autre part, à l'autre extrémité dudit arbre flexible, ledit « Follow focus » constitué d'un dispositif de roues crantées fixées sur l'objectif de ladite caméra et/appareil photo dont la rotation des dites roues crantées actionnent la rotation d'une bague crantée fixée sur la bague de l'objectif dans le but de contrôler la netteté et/ou le zoom et/ou l'iris à partir de la poignée de ladite épaulière.

Ledit arbre flexible est constituée d'un câble d'acier logé à l'intérieur d'une gaine, laquelle gaine est composée à ses deux extrémités de raccords, guidant et empêchant ledit câble d'acier de se vriller à l'intérieur de ladite gaine et permettant l'utilisation d'un câble de faible diamètre dont la particularité est de provoquer de faibles frictions internes audit câble, permettant ainsi au système de fonctionner.

Dans un mode de réalisation, peuvent être logés, à l'intérieur des dits raccords, des coussinets ou des paliers de roulements à billes montés sur les extrémités dudit arbre flexible servant à guider et à supporter des organes tournants que sont les embouts, la fonction des dits coussinets ou des dits paliers de roulements à billes étant de réduire les frottements donc de diminuer les résistances au mouvement entre lesdits raccords et lesdits embouts, tout autre système optimisant le frottement (c'est à dire le minimisant) et la précision de la liaison entre ladite gaine et ledit câble étant aussi possible.

Dans un mode de réalisation où ladite molette de contrôle de la netteté et/ou du zoom est fixée mécaniquement à l'extérieur de la poignée de ladite épaulière, donc de manière déportée, dans un tel dispositif où ledit arbre flexible est relié mécaniquement à ladite molette, ladite molette est fixée à ladite poignée de l'épaulière à l'aide d'une bride parallèle ou de tout autre moyen de liaison avec ladite poignée dont les deux orifices de ladite bride parallèle encerclent d'une part la poignée de ladite épaulière et d'autre part le raccord inférieur dudit arbre flexible dont l'embout inférieur est relié mécaniquement, à l'aide du perçage cylindrique avec vis d'arrêt se trouvant sur ledit embout ou par tout autre moyen de fixation mécanique, à ladite molette rendant ladite poignée solidaire dudit arbre flexible grâce à la pièce intermédiaire de liaison que constitue ladite bride parallèle comportant un ou plusieurs leviers de serrage ou écrous simples ou tout autre moyen servant à bloquer les deux pièces à rassembler par la présence même de ladite bride parallèle, à savoir ladite poignée d'une part et ladite molette se trouvant à l'extrémité dudit arbre flexible d'autre part.

Ledit embout relié à ladite molette peut comporter dans un mode de réalisation des composants mécaniques tels que des doubles écrous positionnés sur le filetage du raccord inférieur évitant que ladite gaine ne se mette à tourner avec ledit câble d'acier.

Avantageusement, ledit câble d'acier, commandé manuellement par ladite molette, est entraîné par la rotation de ladite molette effectuée par le pouce et/ou l'index de l'utilisateur, les autres doigts servant à attraper ladite poignée et entraine à son tour, par la rotation de l'embout rattaché audit câble, les engrenages dudit « Follow focus » se trouvant à l'extrémité supérieure dudit arbre flexible et rattaché audit « Follow focus » par une pièce intermédiaire ou par ledit embout usiné à cet effet, entraînant la bague de l'objectif contrôlant le zoom et/ou la netteté et/ou l'iris, deux contrôles étant possibles simultanément si les deux dites poignées de ladite épaulière sont équipées de l'invention.

Ledit câble d'acier peut comporter à son extrémité supérieure une pièce rapportée, venant se loger dans l'orifice de la molette du « Follow focus » et faisant la liaison entre ledit « Follow focus » d'une part et et ledit arbre flexible d'autre part.

Le diamètre de préhension de ladite molette peut être augmenté par la présence de branches ou tiges (20), qui sont des organes cylindriques à symétrie axiale généralement, ou excroissances quelles quelles soient, permettant de créer des butées plus importante que celles engendrées par ladite molette à elle seule, et d'augmenter le moment de la force par rapport à l'axe de ladite poignée, ledit moment étant une grandeur physique vectorielle traduisant l'aptitude d'une force à faire tourner un système mécanique autour du point constitué par l'axe de ladite poignée, ceci aidant l'utilisateur à tourner plus facilement, c'est-à-dire avec moins d'efforts, ladite molette autour de son axe.

Dans le cas où une résistance trop importante se sentirait lors de la rotation de ladite molette, ledit embout peut être raccordé à un réducteur qui est un système d'engrenages dont le rapport de transmission est inférieur à 1, afin d'augmenter le couple moteur de la rotation de la bague de l'objectif ou pour en réduire la vitesse, ledit réducteur pouvant se situer sur quelque emplacement que ce soit du dispositif, y compris faire partie intégrante de ladite poignée ou de ladite molette ou dudit embout ou même dudit câble.

Le dispositif peut comporter une bague ou disque de marquage (21) généralement de couleur blanche, solidaire de ladite molette, afin de reporter les informations figurant sur la bague de marquage du « follow-focus », peu lisibles lorsque ladite caméra et/ou appareil photo se trouve sur une épaulière, en inscrivant sur ledit disque blanc (21) des repères pour le plan à tourner, la rotation de ladite molette entrainant la rotation dudit disque blanc (21), ledit disque blanc (21) se mouvant par rapport à un repère fixe pouvant être constitué par une pointe (22) par exemple, ceci permettant à l'opérateur caméra de retrouver la position exacte de la netteté en effectuant la rotation de ladite molette et donc dudit disque blanc (21) jusqu'à l'obtention d'un alignement continu entre le marquage dudit disque blanc (21), effectué à l'aide d'un stylo ou d'un marqueur à encre par exemple, et ladite pointe (22), permettant ainsi à l'utilisateur de retrouver la netteté programmée sur un objet ou un personnage (ladite pointe (22) étant désolidarisée de ladite molette, c'est-à-dire que la rotation de ladite molette n'entrainant pas la rotation de ladite pointe (22)).

Afin de répondre à la diversité des matériels figurant sur le marché, dont les caractéristiques dimensionnelles varient selon les fabricants (objectifs des caméras et/ou appareils photos, follow-focus, épaulières...), ladite gaine contenant ledit câble peut être interchangeable et être remplacée, si besoin, par une gaine de longueur différente en se désolidarisant du reste du système, et ce, par quelque moyen que ce soit.
Dans un mode de réalisation, ladite gaine contenant ledit câble pourra être clipssable à ladite poignée par pression ou par fixation mécanique « mâle-femelle » ou par fixation magnétique (aimants) ou par quelque autre moyen que ce soit.

Tout le système objet de la présente demande peut avoir plusieurs degrés de liberté entre chaque élément le constituant, la poignée tournant sans interférer dans la fonction du dispositif, c'est à dire que cette ergonomie confère la possibilité d'un degré de mouvement supplémentaire par rapport à l'action de la molette à elle seule seule, offrant un couple plus important à la molette car l'utilisateur serre la poignée et la molette en même temps, ce qui engendre in fine un serrage du système plus important et donc un couple plus important accompagné d'un angle de rotation plus important et ce, sans relâcher la poignée.

Dans un autre mode de réalisation, l'arbre de transmission peut être constitué par un système de cardans qui est un dispositif mécanique qui permet la transmission d'une rotation angulaire entre deux arbres dont les axes géométriques concourent en un même point, s'utilisant pour deux arbres tournant non alignés, dont les positions angulaires, l'un par rapport à l'autre, peuvent varier.

Le résultat de l'invention est un dispositif permettant, par une rotation de ladite molette située à proximité immédiate de la poignée de ladite épaulière, la rotation de la bague de l'objectif contrôlant la netteté et/ou le zoom et/ou l'iris à partir de la poignée de ladite épaulière.

Dans un autre mode de réalisation où ladite molette de contrôle de la netteté et/ou du zoom est intégrée à ladite poignée de ladite épaulière, dont la structure de ladite poignée est constituée par un tube creux généralement cylindrique, ladite poignée comporte un espace vide pouvant contenir tout le système de contrôle de la netteté et/ou du zoom dans une chambre constituée par le vide existant dans ledit tube et où dans ladite chambre vient se loger ledit système de contrôle
permettant la rotation de ladite molette et, par conséquent, la rotation de ladite bague crantée contrôlant la netteté et/ou le zoom et/ou l'iris ensemble ou séparément, ensemble dans le cas de l'équipement dudit système sur les deux poignées droite et gauche.

Dans un tel dispositif, ladite chambre contient ladite molette fixée mécaniquement à l'extrémité inférieure dudit arbre flexible dont l'embout inférieur, relié audit câble d'acier entouré de ladite gaine, contrôle par sa propre rotation, engendrée par la rotation de ladite molette, la rotation de la bague de l'objectif de ladite caméra et/ou de l'appareil photo.

Selon un mode de fabrication, un système comportant un ou plusieurs paliers de roulements à billes pourra être rajouté dans ladite chambre afin de caler ladite molette aux parois internes dudit tube constituant ladite structure de la poignée de l'épaulière afin d'immobiliser verticalement ladite molette tout en la laissant libre de tout mouvement de rotation, ledit tube pouvant être recouvert d'une gaine ergonomique pour servir le confort de l'utilisateur.

Ladite chambre, contenant ledit système de contrôle de la netteté et/ou du zoom constitué par ladite molette peut, par exemple, comporter une ou plusieurs fenêtres fabriquées en le découpage dudit tube et constituées par un ou plusieurs orifices traversant de part en part ledit tube afin de visualiser et de manipuler ladite molette et d'en contrôler la rotation par le contact entre ladite molette et les doigts de l'utilisateur afin de contrôler la netteté et/ou le zoom et/ou l'iris par la rotation de celle-ci.

Tout autre moyen permettant au dispositif de fonctionner, où la molette se trouverait sur un quelconque emplacement longeant ladite poignée, c'est à dire dans un axe identique, est aussi possible.

Le diamètre de préhension de ladite molette peut être augmenté par la présence de branches ou tiges (20), qui sont des organes cylindriques à symétrie axiale généralement, ou excroissances quelles quelles soient, permettant de créer des butées plus importante que celles engendrées par ladite molette à elle seule, et d'augmenter le moment de la force par rapport à l'axe de ladite poignée, ledit moment étant une grandeur physique vectorielle traduisant l'aptitude d'une force à faire tourner un système mécanique autour du point constitué par l'axe de ladite poignée, ceci aidant l'utilisateur à tourner plus facilement, c'est-à-dire avec moins d'efforts, ladite molette autour de son axe.

Dans le cas où une résistance trop importante se sentirait lors de la rotation de ladite molette, ledit embout peut être raccordé à un réducteur qui est un système d'engrenages dont le rapport de transmission est inférieur à 1, afin d'augmenter le couple moteur de la rotation de la bague de l'objectif ou pour en réduire la vitesse, ledit réducteur pouvant se situer sur quelque emplacement que ce soit du dispositif, y compris faire partie intégrante de ladite poignée ou de ladite molette ou dudit embout ou même dudit câble.

Le dispositif peut comporter une bague ou disque de marquage (21) généralement de couleur blanche, solidaire de ladite molette, afin de reporter les informations figurant sur la bague de marquage du « follow-focus », peu lisibles lorsque ladite caméra et/ou appareil photo se trouve sur une épaulière, en inscrivant sur ledit disque blanc (21) des repères pour le plan à tourner, la rotation de ladite molette entrainant la rotation dudit disque blanc (21), ledit disque blanc (21) se mouvant par rapport à un repère fixe pouvant être constitué par une pointe (22) par exemple, ceci permettant à l'opérateur caméra de retrouver la position exacte de la netteté en effectuant la rotation de ladite molette et donc dudit disque blanc (21) jusqu'à l'obtention d'un alignement continu entre le marquage dudit disque blanc (21), effectué à l'aide d'un stylo ou d'un marqueur à encre par exemple, et ladite pointe (22), permettant ainsi à l'utilisateur de retrouver la netteté programmée sur un objet ou un personnage (ladite pointe (22) étant désolidarisée de ladite molette, c'est-à-dire que la rotation de ladite molette n'entrainant pas la rotation de ladite pointe(22)).

Afin de répondre à la diversité des matériels figurant sur le marché, dont les caractéristiques dimensionnelles varient selon les fabricants (objectifs des caméras et/ou appareils photos, follow-focus, épaulières...), ladite gaine contenant ledit câble peut être interchangeable et être remplacée, si besoin, par une gaine de longueur différente en se désolidarisant du reste du système, et ce, par quelque moyen que ce soit.
Dans un mode de réalisation, ladite gaine contenant ledit câble pourra être clipssable à ladite poignée par pression ou par fixation mécanique « mâle-femelle » ou par fixation magnétique (aimants) ou par quelque autre moyen que ce soit.

Tout le système objet de la présente demande peut avoir plusieurs degrés de liberté entre chaque élément le constituant, la poignée tournant sans interférer dans la fonction du dispositif, c'est à dire que cette ergonomie confère la possibilité d'un degré de mouvement supplémentaire par rapport à l'action de la molette à elle seule seule, offrant un couple plus important à la molette car l'utilisateur serre la poignée et la molette en même temps, ce qui engendre in fine un serrage du système plus important et donc un couple plus important accompagné d'un angle de rotation plus important et ce, sans relâcher la poignée.

Le résultat de l'invention est un dispositif permettant, par une rotation de ladite molette située sur la poignée de ladite épaulière, la rotation de ladite bague de l'objectif de la caméra et/ou appareil photo rattachée aux engrenages dudit « Follow focus » et, par conséquent, le contrôle de la netteté et/ou le zoom et/ou l'iris à partir de la poignée de ladite épaulière.

Les avantages et caractéristiques de l'invention ressortiront à la lecture de la description suivante donnée à titre d'exemple et en référence aux dessins annexés sur lesquels :
- La figure 1A est une vue d'ensemble schématique d'un dispositif de contrôle de la netteté et/ou du zoom à partir de la poignée (4) de ladite épaulière, selon l'invention où ladite molette (1) est est déportée par rapport à ladite poignée (4);
- La figure 1B est une vue d'ensemble schématique d'un dispositif de contrôle de la netteté et/ou du zoom à partir de la poignée (4) dé ladite épaulière, selon l'invention où ladite molette (1) est intégrée à ladite poignée (4);
- La figure 2 est une vue en coupe suivant la ligne II/II de la figure 1A et correspond à ladite bride parallèle;
- La figure 3 est une vue explosée illustrant la liaison entre ladite molette (1), ladite bride (5) et ledit arbre flexible où ladite molette (1) est déportée par rapport à ladite poignée (4) de ladite épaulière, selon un mode de fabrication;
- La figure 4 est une vue explosée illustrant la liaison entre ladite molette (1) et ledit arbre flexible où ladite molette (1) est intégrée à ladite poignée (4) de ladite épaulière, selon un mode de fabrication;

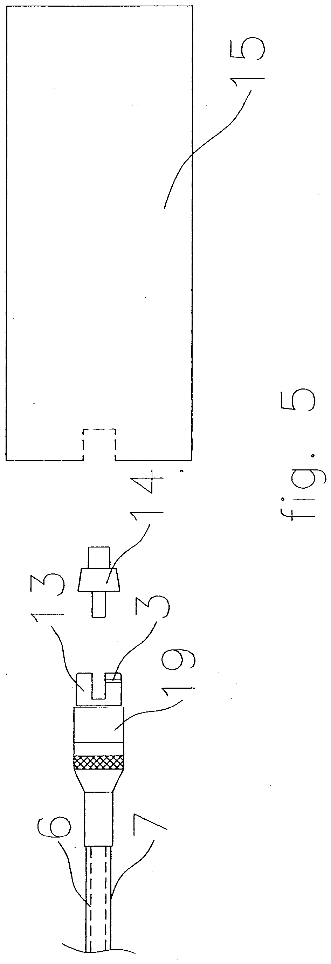

- La figure 5 est un détail illustrant la liaison entre ledit arbre flexible et ledit « Follow focus » (15);
- La figure 6 est un détail illustrant ledit coussinet (16), selon un mode de fabrication;
- La figure 7 est un détail illustrant ledit pallier de roulement à billes (17), selon un mode de fabrication;
- La figure 8 représente l'utilisation de l'invention où ladite molette (1) de contrôle de la netteté et/ou du zoom est est déportée par rapport à ladite poignée (4) de ladite épaulière;
- La figure 9 représente l'utilisation de l'invention où ladite molette (1) de contrôle de la netteté et/ou du zoom est intégrée à ladite poignée (4) de ladite épaulière (23).

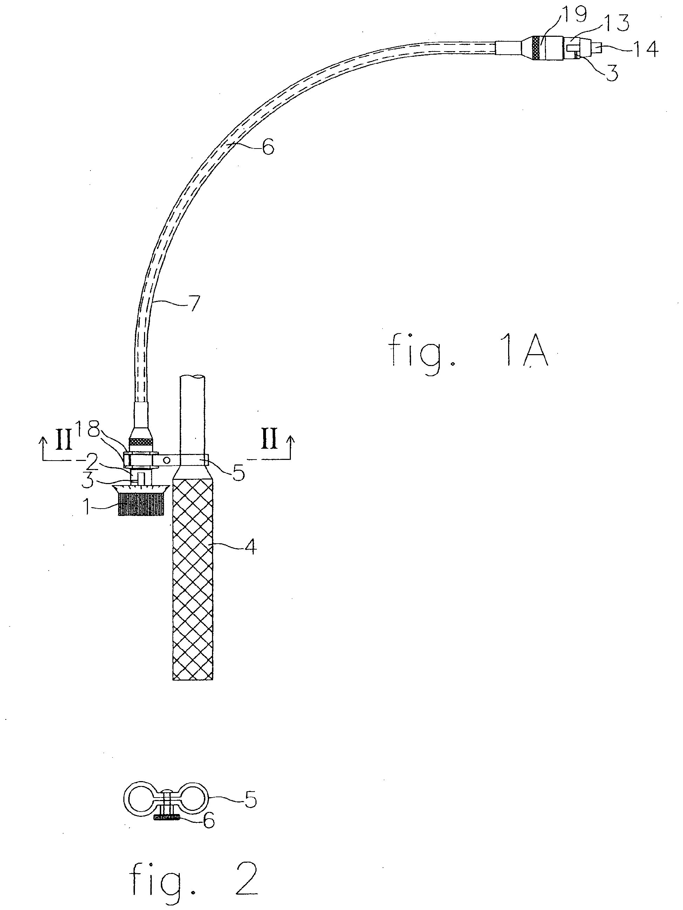

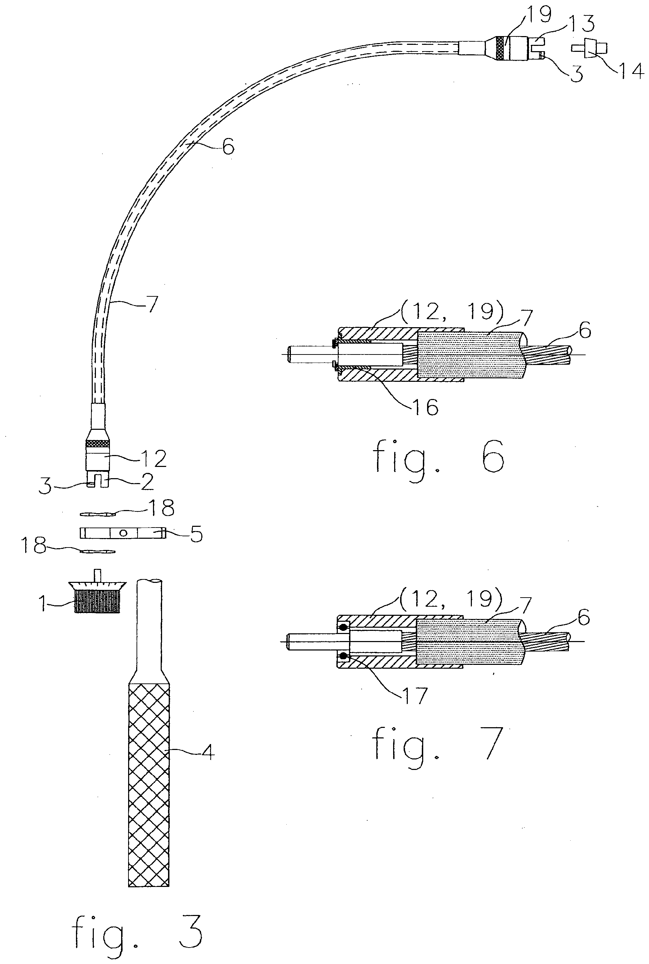

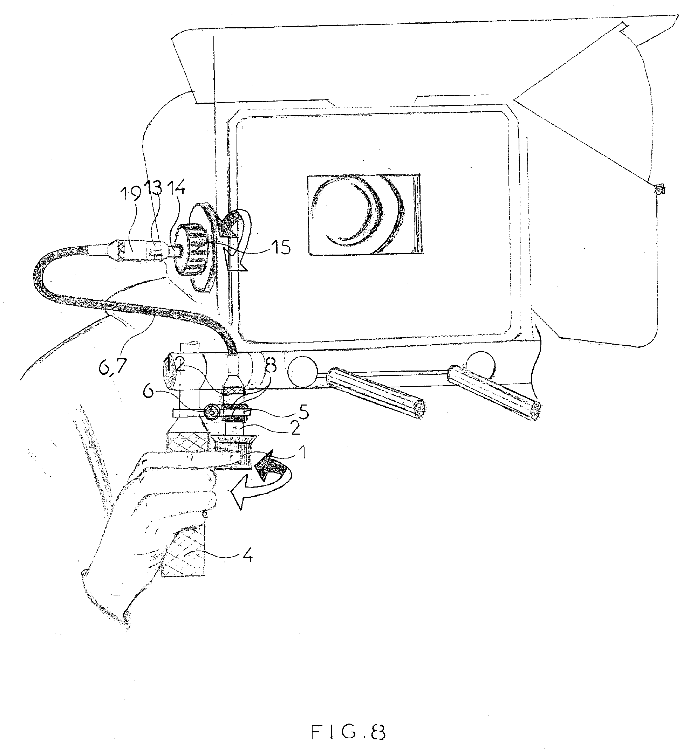

Le dispositif selon l'invention où ladite molette (1) est déportée par rapport à ladite poignée (4) de ladite épaulière (figure 1A, figure 3, figure 8) se compose de ladite molette (1) fixée mécaniquement à l'embout inférieur (2) se trouvant à l'extrémité inférieure dudit arbre flexible par un perçage cylindrique avec vis d'arrêt (3) ou par tout autre moyen de liaison et de fixation, y compris l'usinage des dits embouts (2,13) et/ou raccords (12, 19) pour atteindre le dispositif voulu.

Le raccord inférieur (12) est relié mécaniquement à ladite poignée (4) à l'aide de ladite bride parallèle (5) permettant de liaisonner les deux éléments entre eux et comportant une ou plusieurs vis ou leviers de serrage (6), le serrage de ladite vis ou levier de serrage (6) engendrant le serrage de ladite poignée (4) et de ladite molette (1) à l'intérieur de ladite bride (5) et donc la liaison de ces trois éléments, l'embout supérieur (13) pouvant être relié à une pièce intermédiaire (14) usinée à cet effet et faisant la liaison entre ledit embout supérieur (13) et ledit dispositif de roues crantées fixées sur l'objectif appelé « Follow focus » (15).

Ledit raccord inférieur (12) relié à ladite bride parallèle (5) (1) comporte des composants mécaniques tels que des doubles écrous (18) serrant de part en part ladite bride parallèle (5) et évitant que ladite gaine (7) ne se mette à tourner.

La mise au point de la netteté et/ou le contrôle du zoom de la caméra et/ou de l'appareil photo est réalisée par la rotation de ladite molette (1) s'actionnant à l'aide des doigts de l'utilisateur, afin d'entrainer la rotation dudit câble (6) dans ladite gaine (7) qui l'entoure, ladite gaine (7) ayant pour fonction d'empêcher ledit câble (6) de se vriller outre mesure.

La rotation dudit câble (6) entrainera la rotation de l'embout supérieur (13) fixé au dit « Follow focus » (15) et, par conséquent, la rotation des roues crantées dudit « Follow focus » (15) lié à l'objectif de ladite caméra et/ou de l'appareil photo, entrainant à son tour la rotation de la bague de l'objectif contrôlant la netteté et/ou le zoom et/ou l'iris.

Pour résumer, la rotation de ladite molette (1), à partir de la poignée (4) de ladite épaulière, entrainera la rotation de ladite bague de l'objectif contrôlant la netteté et/ou le zoom et/ou l'iris.

Les deux embouts inférieur et supérieur (2,13) peuvent comporter des composants mécaniques tels que des roulements à billes (17) ou des coussinets (16) ou tout autre système optimisant le frottement (c'est à dire le minimisant) et la précision de la liaison entre ladite gaine (7) et ledit câble (6), mais qui seront facultatifs dans certains cas, selon essais, ladite gaine (7) devant, dans tous les cas de figure, être désolidarisée dudit câble (6), c'est à dire permettant audit câble (6) de tourner librement à l'intérieur de ladite gaine (7).

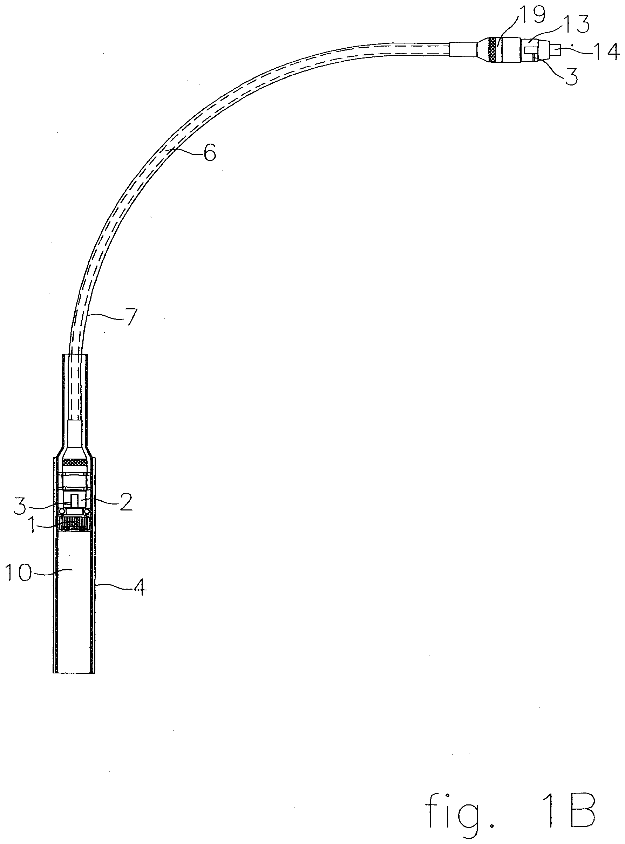

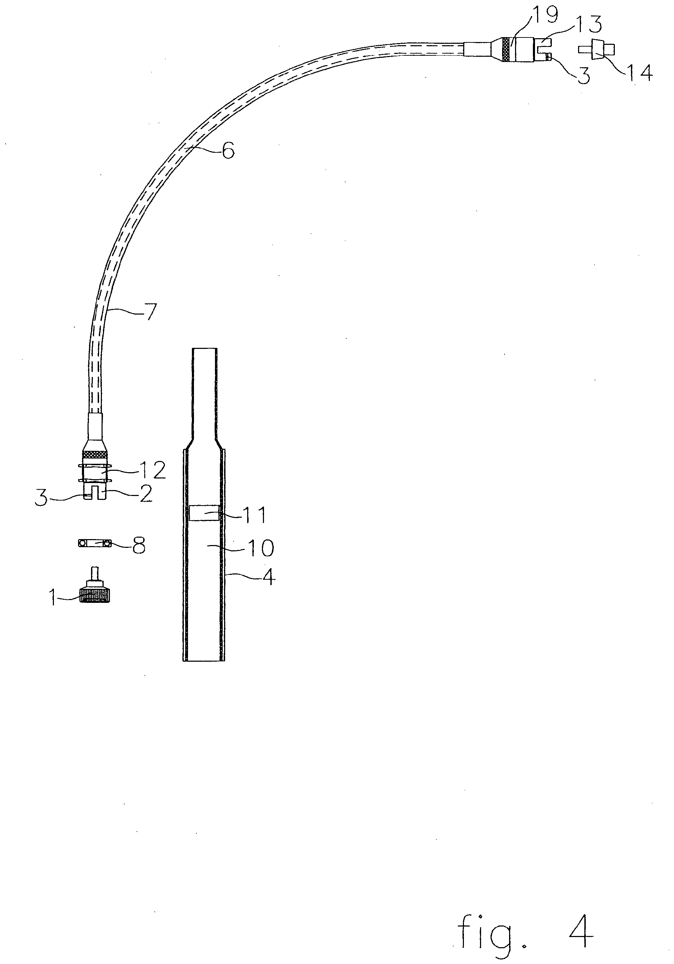

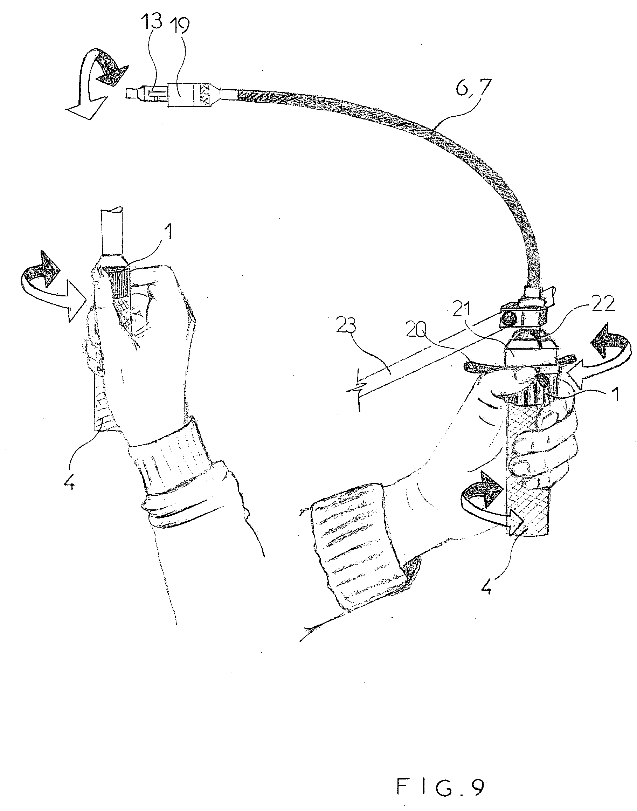

Le dispositif selon l'invention où ladite molette (1) est intégrée à ladite poignée (4) de ladite épaulière (figure 1B, figure 4, figure 9) se compose de ladite molette (1) fixée mécaniquement à l'embout inférieur (2), se trouvant à l'une des extrémités dudit arbre flexible, par un perçage cylindrique avec vis d'arrêt (3) ou par tout autre moyen de liaison et de fixation, y compris l'usinage des dits embouts (2, 13) et/ou raccords (12, 19) pour atteindre les dispositifs voulus.

L'embout inférieur (2) vient directement se loger à l'intérieur de ladite poignée (4), ledit embout inférieur (2) étant relié mécaniquement à ladite molette (1), dans une chambre (10) créée par l'espace vide constitué par la morphologie même du tube creux et dont les parois dudit tube, possédant un ou plusieurs orifices (11) créés par un découpage traversant, laissent apparaître ladite molette (1) dans le but de la manipuler, l'embout supérieur (13) pouvant être relié à une pièce intermédiaire usinée à cet effet et faisant la liaison entre ledit embout supérieur (13) et ledit dispositif de roues crantées fixées sur l'objectif appelé « Follow focus » (15).

Les dits raccords (12, 19) peuvent comporter des composants mécaniques tels que les dits roulements à billes (17) ou les dits coussinets (16) ou tout autre système optimisant le frottement (c'est à dire le minimisant) et la précision de la liaison entre ladite gaine (7) et ledit câble (6), mais qui seront facultatifs dans certains cas, selon essais, ladite gaine (7) devant, dans tous les cas de figure, être désolidarisée dudit câble (6), c'est à dire permettant audit câble (6) de tourner librement à l'intérieur de ladite gaine (7).

La mise au point de la netteté et/ou le contrôle du zoom et/ou le contrôle de l'iris de l'objectif ladite caméra et/ou de l'appareil photo est réalisée par la rotation de ladite molette (1) se faisant à l'aide du des doigts de l'utilisateur, par exemple, afin d'entrainer la rotation dudit câble (6) qui est désolidarisé de ladite gaine (7) qui l'entoure, ladite gaine (7) ayant pour fonction d'empêcher ledit câble (6) de se vriller outre mesure, la rotation dudit câble (6) entrainant la rotation de l'embout supérieur (13) et, par conséquent, la rotation des roues crantées dudit «Follow focus» (15) liées à l'objectif de ladite caméra et/ou de l'appareil photo entrainant la bague dudit objectif contrôlant la netteté et/ou le zoom et/ou l'iris.
Dans ce cas de figure, le raccord inférieur (12) sera liaisonné aux parois internes dudit tube creux par quel que moyen que ce soit et ce, afin de bloquer ledit raccord inférieur (12) aux parois internes dudit tube creux, évitant que ladite gaine (7) liée audit raccord inférieur (12) ne se mette à tourner librement.

Pour résumer, la rotation de ladite molette (1) à partir de la poignée (4) de ladite épaulière entrainera au final la rotation de la bague de l'objectif contrôlant la netteté et/ou le zoom et/ou l'iris.

## Revendications

1. Dispositif pour commander à distance mécaniquement la netteté et/ou le zoom et/ou l'iris d'un objectif d'une caméra et/ou d'un appareil photo au moyen d'une molette et d'un arbre de transmission, **caractérisé en ce que** ledit arbre de transmission mécanique transmet les rotations de ladite molette (1) actionnée à partir d'une poignée d'épaulière (4) par le pouce et/ou l'index de l'utilisateur, les autres doigts servant à attraper ladite poignée (4), jusqu'à l'objectif de ladite caméra et/ou appareil photo, au moyen d'un système dit « Suiveur de point », communément appelé « Follow-focus » par l'homme du métier, ledit arbre de transmission (12) possédant à ses deux extrémités un embout (2,13) raccordé mécaniquement d'une part à ladite molette (1) pour le premier embout (2) et d'autre part au système « Suiveur de point » (15) pour le deuxième embout (13) et les deux embouts (2,13) étant reliés entre eux soit (i) par un câble (6) entouré d'une gaine (7) constituant un arbre flexible, la gaine (7) étant désolidarisée du câble (6) pour lui permettre de tourner librement dans la gaine (7) et cette dernière comportant un raccord (12, 19) à chacune de ses deux extrémités, guidant et empêchant le câble (6) de se vriller à l'intérieur de la gaine (7), soit (ii) par un système à cardan.

2. Dispositif selon la revendication 1, **caractérisé en ce que** lesdites rotations sont transmises à partir de ladite molette (1) vers ledit système « Suiveur de point » (15), en exerçant la rotation de la bague de l'objectif lorsque ladite molette (1) est actionnée par l'utilisateur à partir de ladite poignée (4).

3. Dispositif selon la revendication 1, **caractérisé en ce que** ledit câble comporte à son extrémité supérieure une pièce rapportée, venant se loger dans l'orifice de la molette dudit « Follow focus » (15) et faisant la liaison entre ledit « Follow focus » (15) d'une part et ledit arbre flexible d'autre part.

4. Dispositif selon l'une quelconque des revendications 1 à 3, **caractérisé en ce que** ladite molette (1) est reliée mécaniquement à ladite poignée (4) de ladite épaulière à l'aide d'une bride parallèle (5).

5. Dispositif selon l'une quelconque des revendications 1 à 4, **caractérisé en ce que** ledit embout (2) relié à ladite molette (1) comporte des composants mécaniques tels que des doubles écrous (18) évitant que ladite gaine (7) ne se mette à tourner.

6. Dispositif selon l'une quelconque des revendications 1 et 3, **caractérisé en ce que** ladite molette (1) est intégrée à ladite poignée (4), créant une continuité longitudinale entre ledit arbre flexible et ladite poignée (4) ou sur un quelconque emplacement longeant ladite poignée (4), c'est-à-dire dans un axe identique.

7. Dispositif selon la revendication précédente **caractérisé en ce que** ladite poignée (4) constituée par un tube creux, comporte une chambre constituée par le vide existant dans ledit tube et où dans ladite chambre vient se loger un système permettant la rotation de ladite molette (1) par rapport à ladite poignée (4), ladite chambre contenant ladite molette (1), ledit système comportant un ou plusieurs paliers de roulements à billes (8) permettant à ladite molette (1) tout mouvement de rotation par rapport audit tube creux (4).

8. Dispositif selon l'une quelconque des revendications 1 à 7, **caractérisé en ce que** lesdits embouts (2,13) comportent des composants mécaniques tels que des roulements à billes (17) ou des coussinets (16) ou tout autre système optimisant le frottement et la précision de la liaison entre ladite gaine (7) et ledit câble (6).

9. Dispositif selon l'une quelconque des revendications précédentes selon lequel le diamètre de préhension de ladite molette (1) est augmenté par la présence de branches ou tiges.

10. Dispositif selon l'une quelconque des revendications précédentes selon lequel ledit embout (13) est raccordé à un réducteur qui est un système d'engrenages dont le rapport de transmission est inférieur à 1, afin d'augmenter le couple moteur de la rotation de la bague de l'objectif ou pour en réduire la vitesse.

11. Dispositif selon l'une quelconque des revendications précédentes selon lequel le système comporte une bague ou disque de marquage généralement de couleur blanche, solidaire de ladite molette (1), afin de reporter les informations figurant sur la bague de marquage dudit « follow-focus » (15), en inscrivant sur ledit disque blanc des repères pour le plan à tourner, la rotation de ladite molette (1) entraînant la rotation dudit disque blanc, ledit disque blanc se mouvant par rapport à un repère fixe pouvant être constitué par une pointe.

12. Dispositif selon l'une quelconque des revendications précédentes selon lequel ladite gaine (7) contenant ledit câble (6) est interchangeable et peut être remplacée, si besoin, par une gaine de longueur différente en se désolidarisant du reste du système, et ce, par quelque moyen que ce soit.

13. Dispositif selon l'une quelconque des revendications précédentes selon lequel ladite poignée (4) tourne sans interférer dans la fonction du dispositif, c'est-à-dire que cette ergonomie confère la possibilité d'un degré de mouvement supplémentaire par rapport à l'action de ladite molette (1) à elle seule, offrant un couple plus important à ladite molette (1).

14. Dispositif selon la revendication 1, selon lequel des coussinets (16) ou des paliers à billes (17) sont logés à l'intérieur des raccords (12, 19) et montés sur les extrémités de l'arbre flexible, pour guider et supporter les organes tournants que sont les embouts (2, 13).

## Patentansprüche

1. Vorrichtung zur mechanischen Fernsteuerung der Schärfe und/oder des Zooms und/oder der Iris eines Objektivs einer Kamera und/oder einer Kamera mittels eines Drehknopfs und einer Antriebswelle, **Dadurch gekennzeichnet, dass** die mechanische Antriebswelle die Drehungen des Daumenrads (1), das von einem Schultergriff (4) aus betätigt wird, durch den Daumen und/oder den Zeigefinger des Benutzers überträgt, wobei die anderen Finger dazu dienen, den Griff (4) zu greifenbis zum Objektiv der Kamera und/oder Kamera mittels eines sogenannten «Punktverfolgers», gemeinhin vom Fachmann als «Follow-focus» bezeichnet, wobei die Antriebswelle (12) an beiden Enden mit einem Endstück (2, 13) versehen ist mechanisch einerseits mit dem Rädchen (1) für das erste Endstück (2) und andererseits mit «Punktnachführungssystem» (15) für das zweite Ansatzstück (13) und die beiden Ansatzstücke (2, 13) sind entweder (i) durch ein Kabel (6) miteinander verbunden, das von einem Mantel (7) umgeben ist, der eine flexible Welle bildet, wobei der Mantel (7) vom Kabel (6) gelöst ist um ihm zu ermöglichen, sich frei in der Hülle (7) zu drehen, wobei die Hülle (7) an beiden Enden jeweils ein Verbindungsstück (12, 19) aufweist, das das Kabel (6) innerhalb der Hülle (7) führt und daran hindert, sich zu verdrehen, oder (ii) durch ein Kardansystem.

2. Vorrichtung nach Anspruch 1, **dadurch gekennzeichnet, dass** die Drehungen von dem Rändelrad (1) auf das System «Punktverfolger» (15) übertragen werden, indem die Drehung des Rings des Objektivs ausgeübt wird, wenn das Rändelrad (1) eine vom Benutzer von dem Handgriff (4) aus betätigt wird.

3. Vorrichtung nach Anspruch 1, **dadurch gekennzeichnet, daß** das Kabel an seinem oberen Ende einen Einsatz aufweist, der in die Öffnung der Rolle des «Follow focus» (15) paßt und die Verbindung zwischen dem «Follow focus» (15) herstellt einerseits und die flexible Welle andererseits.

4. Vorrichtung nach einem der Ansprüche 1 bis 3, **dadurch gekennzeichnet, dass** das Rändelrad (1) mit dem Griff (4) der Schulterstütze mittels eines parallelen Flansches (5) mechanisch verbunden ist.

5. Vorrichtung nach einem der Ansprüche 1 bis 4, **dadurch gekennzeichnet, dass** der mit dem Rändelrad (1) verbundene Ansatz (2) mechanische Komponenten wie Doppelmuttern (18) aufweist, die verhindern, dass sich die Hülle (7) dreht.

6. Vorrichtung nach einem der Ansprüche 1 und 3, **dadurch gekennzeichnet, dass** das Rändelrad (1) in den Griff (4) integriert ist, wodurch eine Längskontinuität zwischen der flexiblen Welle und dem Griff (4) oder an irgendeiner Stelle entlang des Griffs (4) geschaffen wirdDas heißt, in einer identischen Achse.

7. Vorrichtung nach dem vorhergehenden Anspruch, **dadurch gekennzeichnet, dass** der Griff (4), der aus einem hohlen Rohr besteht, eine Kammer umfasst, die aus dem in dem Rohr vorhandenen Vakuum besteht, und wo in der Kammer ein System untergebracht ist, das die Drehung des Rändelrades (1) ermöglicht Relativ zu dem Griff (4) enthält die Kammer das Rändelrad (1), wobei das System ein oder mehrere Kugellager (8) aufweist, die eine Drehbewegung des Rändelrades (1) relativ zu dem hohlen Rohr (4) ermöglichen.

8. Vorrichtung nach einem der Ansprüche 1 bis 7, **dadurch gekennzeichnet, dass** die Ansatzstücke (2, 13) mechanische Komponenten wie Kugellager (17) oder Lager (16) aufweisen oder ein anderes System, das die Reibung und Genauigkeit der Verbindung zwischen dem Mantel (7) und dem Kabel (6) optimiert.

9. Vorrichtung nach einem der vorhergehenden Ansprüche, bei der der Greifdurchmesser des Rändelrades (1) durch das Vorhandensein von Schenkeln oder Stangen vergrößert wird.

10. Vorrichtung nach einem der vorhergehenden Ansprüche, bei der das Endstück (13) mit einem Untersetzungsgetriebe verbunden ist, das ein Getriebesystem mit einem Übersetzungsverhältnis kleiner als 1 ist, zur Erhöhung des Motordrehmoments der Linsenringdrehung oder zur Reduzierung der Linsendrehzahl.

11. Vorrichtung nach einem der vorhergehenden Ansprüche, wobei das System einen im allgemeinen weißen Markierungsring oder eine Markierungsscheibe aufweist, der bzw. die mit dem Rändelrad (1) fest verbunden ist, um die Informationen zu übertragen, die auf dem Markierungsring des »follow-focus«(15), wobei auf die weiße Scheibe Markierungen für die zu drehende Ebene geschrieben werden, wobei die Drehung des Drehrades (1) eine Drehung der weißen Scheibe bewirkt, wobei die weiße Scheibe sich relativ zu einer festen Markierung bewegt, die durch eine Spitze gebildet werden kann.

12. Vorrichtung nach einem der vorhergehenden Ansprüche, bei der die Hülle (7), die das Kabel (6) enthält, austauschbar ist und bei Bedarf durch eine Hülle unterschiedlicher Länge ersetzt wird, indem sie sich vom Rest des Systems löst; Und zwar auf jede erdenkliche Weise.

13. Vorrichtung nach einem der vorhergehenden Ansprüche, bei der sich der Griff (4) dreht, ohne die Funktion der Vorrichtung zu stören, Das heisst, dass diese Ergonomie die Möglichkeit einer gegenüber der Wirkung des Rädchens (1) allein zusätzlichen Bewegung schafft, die dem Rädchen (1) ein grösseres Drehmoment verleiht.

14. Vorrichtung nach Anspruch 1, bei der Buchsen (16) oder Kugellager (17) innerhalb der Verbindungsstücke (12, 19) aufgenommen und an den Enden der flexiblen Welle angebracht sind, um die drehbaren Elemente der Endstücke (2, 13) zu führen und zu tragen.

## Claims

1. A device for remotely controlling the sharpness and/or zoom and/or iris of a camera and/or camera lens by means of a knob and transmission shaft, **characterized in that** said mechanical transmission shaft transmits the rotations of said knob (1) actuated from a shoulder handle (4) by the thumb and/or index finger of the user, the other fingers used to catch said handle (4), up to the lens of the said camera and/or camera, by means of a system known as "Point Follower", commonly referred to as "Follow-focus" by the skilled person, said transmission shaft (12) having at both ends a tip (2,13) mechanically connected on the one hand to the said knob (1) for the first bit (2) and on the other hand to the "Point Follower" system (15) for the second bit (13) and the two bits (2,13) being connected to each other either (i) by a cable (6) surrounded by a sheath (7) constituting a flexible shaft, the sheath (7) being separated from the cable (6) to allow it to rotate freely in the sheath (7) and the latter having a fitting (12, 19) at each of its two ends, guiding and preventing the cable (6) from twisting inside the sheath (7), or (ii) by a gimbal system.

2. A device according to claim 1, **characterised in that** the said rotations are transmitted from said knob (1) to said "Point Follower" system (15), by rotating the lens ring when said knob (1) is operated by the user from said handle (4).

3. A device according to Claim 1, **characterised by** the fact that the said cable has an insert at its upper end, which is lodged in the hole of the "Follow focus" wheel (15) and which links the "Follow focus" (15) on the one hand and said flexible shaft on the other.

4. A device according to any of Claims 1 to 3, **characterised in that** the said knob (1) is mechanically connected to the said handle (4) of the said shoulder pad by means of a parallel flange (5).

5. A device according to any of Claims 1 to 4, **characterised in that** said end-piece (2) connected to said knob (1) contains mechanical components such as double nuts (18) preventing the said sheath (7) from starting to rotate.

6. A device according to any of Claims 1 and 3, **characterised in that** said knob (1) is integrated with said handle (4), creating a longitudinal continuity between said flexible shaft and said handle (4) or on any position along said handle (4), that is, in an identical direction.

7. A device according to the preceding claim **characterised by** the fact that the said handle (4) consists of a hollow tube and consists of a chamber consisting of the vacuum existing in the said tube and in which a system allowing the rotation of the said knob (1) is installed in the said tube with respect to said handle (4), said chamber containing said knob (1), said system comprising one or more ball bearing bearings (8) allowing said knob (1) to rotate in relation to said hollow tube (4).

8. A device according to any of claims 1 to 7, **characterised in that** the ends (2,13) contain mechanical components such as ball bearings (17) or bearings (16) or any other system that optimizes the friction and accuracy of the connection between said sheath (7) and said cable (6).

9. A device according to any of the preceding claims whereby the gripping diameter of the said knob (1) is increased by the presence of branches or rods.

10. A device according to any of the preceding claims according to which said end-piece (13) is connected to a reduction gear which is a gear system with a gear ratio of less than 1, to increase the torque of the rotation of the lens ring or to reduce the speed of the ring.

11. A device according to any of the preceding claims according to which the system includes a ring or marking disc generally of white colour, together with the said dial (1), in order to refer to the information on the marking ring of the said dial (1) "follow-focus" (15), with marks for the plane to be rotated on the said white disk, the rotation of said knob (1) causing the rotation of said white disk, said white disk moving in relation to a fixed mark that may be constituted by a point.

12. A device according to any of the preceding claims according to which said sheath (7) containing said cable (6) is interchangeable and, if necessary, replaced by a sheath of different length by separating itself from the rest of the system, and by any means.

13. A device according to any of the preceding claims according to which said handle (4) rotates without interfering with the function of the device, that is to say that this ergonomics confers the possibility of an additional degree of movement compared to the action of the said knob (1) alone, offering a greater torque to the said knob (1).

14. A device according to Claim 1, according to which bearings (16) or ball bearings (17) are housed within the fittings (12, 19) and mounted on the ends of the flexible shaft, to guide and support the rotating members of the fittings (2, 13).
